# FASCICULE DE BREVET EUROPEEN

(11) **EP 2 614 561 B1**
(45) Date de publication et mention de la délivrance du brevet: **01.11.2017**
(21) Numéro de dépôt: 11773032.5
(22) Date de dépôt: 05.09.2011
(51) Int. Cl.: H01S 3/067, H01S 3/00

(54) **PROCÉDÉ ET DISPOSITIF D'AMPLIFICATION D'UN SIGNAL OPTIQUE**
VERFAHREN UND VORRICHTUNG ZUR VERSTÄRKUNG EINES OPTISCHEN SIGNALS
METHOD AND DEVICE FOR AMPLIFYING AN OPTICAL SIGNAL

(30) Priorité: 07.09.2010 FR 1057107
(43) Date de publication de la demande: 17.07.2013
(73) Titulaire: Centre National de la Recherche Scientifique (C.N.R.S.), 75794 Paris Cedex 16 (FR); Université De Limoges, 87069 Limoges (FR)
(72) Inventeur: KERMENE, Vincent, F-87700 Aixe Sur Vienne (FR); DESFARGES-BERTHELEMOT, Agnès, F-87270 Couzeix (FR); BARTHELEMY, Alain, F-87100 Limoges (FR)
(74) Mandataire: Gevers & Orès
(86) Numéro de dépôt international: PCT/FR2011/052027
(87) Numéro de publication internationale: WO 2012/042141

(56) Documents cités:
- EP-A2- 0 571 126
- WO-A2-2008/121273
- US-A- 5 392 154
- US-A- 5 832 006
- US-A1- 2002 131 164
- US-A1- 2005 128 554
- US-A1- 2005 169 630
- US-A1- 2009 201 575
- US-B1- 6 256 141

## Description

L'invention concerne un procédé et un dispositif d'amplification d'un signal optique présentant une large plage spectrale.

Quoique non exclusivement, ce procédé est particulièrement bien adapté à l'amplification de signaux optiques formés d'une ou plusieurs impulsions ultra-brèves (dont la durée est inférieure à la centaine de femtosecondes) et de spectre large.

On sait que, pour amplifier des impulsions ultra-brèves, il est possible d'utiliser un système d'amplification de type CPA (« Chirped Pulse Amplification » en langue anglo-saxonne), tel que décrit par exemple dans le document US 7,486,436. Ce système comporte une pluralité d'éléments optiques disposés de façon linéaire et successive en aval d'un générateur d'impulsions ultra-brèves. Les impulsions sont tout d'abord étirées (par exemple une centaine de fois) par un premier élément optique dispersif, puis elles sont amplifiées (après une éventuelle pré-amplification) par un second élément optique amplificateur ou par une chaine d'amplificateurs, sous la forme par exemple d'une ou plusieurs fibres optiques amplificatrices, et, enfin, elles sont compressées par un troisième élément optique dispersif de façon à retrouver leur durée initiale. De même on connaît le dispositif du document US-2002/0131164.

Si cette technique est avantageuse pour extraire de l'énergie des impulsions, elle présente cependant l'inconvénient d'engendrer des pertes importantes au niveau des impulsions du fait des étages d'étirement et de compression, qui sont par ailleurs particulièrement encombrants (prismes, réseaux de diffraction, etc. par exemple).

En outre, cette technique présente l'inconvénient d'être sensible au phénomène de rétrécissement spectral par le gain du milieu amplificateur (par exemple une fibre optique amplificatrice), ce qui a pour conséquence l'augmentation de la durée des impulsions. En effet, partant d'un signal optique S_{E} dont la densité spectrale de puissance DSP_{E} est continue et non-nulle sur une plage de longueurs d'onde Δλ_{E} et d'un milieu amplificateur dont le gain G présente une densité spectrale au moins en partie confondue avec DSP_{E} et est continue et non-nulle sur une plage spectrale Δλ_{G}, si Δλ_{E} est supérieure à Δλ_{G}, les longueurs d'ondes comprises dans Δλ_{E}, mais pas dans Δλ_{G}, ne sont pas amplifiées, et celles à la limite de Δλ_{G} le sont très peu. Il s'ensuit donc que le signal optique en sortie de l'amplificateur présente une densité spectrale de puissance non-nulle sur une plage réduite par rapport à Δλ_{E} et que, par conséquent, des informations spectrales ont été perdues ou déformées. Cet effet pénalisant est particulièrement sensible lorsque l'amplification s'opère dans une fibre optique qui procure un gain G élevé mais non-uniforme sur toute la plage spectrale Δλ_{G}.

Une telle technique ne peut donc convenir pour l'amplification d'impulsions ultra-brèves à large bande spectrale.

Afin d'amplifier des impulsions ultra-brèves sans rétrécir leur spectre, une solution connue consiste à utiliser une fibre optique amplificatrice dont les propriétés optiques non-linéaires sont mises à profit, de manière à réaliser à la fois une amplification des impulsions et un élargissement de leur spectre qui aille au-delà du spectre initial. Les impulsions en sortie de fibre peuvent ensuite être compressées pour retrouver leur durée initiale tout en conservant les bienfaits de l'amplification au sein de la fibre.

Toutefois, cette technique connue présente l'inconvénient d'impliquer un nombre important de paramètres (gain de la fibre, dispersion et effets non-linéaires au sein de la fibre), ce qui rend le système d'amplification particulièrement sensible à tout écart par rapport aux paramètres optimisés. Les énergies accessibles avec un tel système s'avèrent par ailleurs inférieures aux énergies généralement observées avec le système CPA décrit ci-dessus.

L'objet de la présente invention est donc un procédé et un dispositif d'amplification d'un signal optique, qui puissent convenir notamment pour l'amplification d'impulsions ultra-brèves à large bande spectrale, à la fois en termes de niveau d'énergie, de robustesse et de préservation du spectre.

A cette fin, selon l'invention, le procédé d'amplification d'un signal optique est défini en revendication 1. Ainsi, grâce à l'invention, il est rendu possible d'amplifier un signal optique à large bande spectrale sans rétrécir celle-ci. En effet, selon l'invention, on amplifie en parallèle N parties différentes du spectre du signal optique, chacune des parties du spectre étant portée par l'un des N signaux optiques élémentaires. Dans la mesure où chacune de ces parties est suffisamment étroite pour que sa largeur soit inférieure à celle du spectre de gain d'amplification, il s'ensuit que chacune de ces parties du spectre du signal optique est amplifiée sans que sa largeur spectrale soit susceptible d'être rétrécie. Les signaux amplifiés élémentaires étant par la suite recombinés pour reconstruire un spectre prédéterminé qui peut être le spectre du signal optique initial, le signal optique ainsi reconstruit est amplifié sans que son spectre - et plus particulièrement sa largeur spectrale - soit dégradé.

On notera que cette division du signal optique est réalisée suivant deux dimensions : une dimension spatiale et une dimension spectrale. Ainsi, à partir d'une répartition par exemple homogène du signal en N signaux élémentaires, l'invention permet, par la division spatiale, de diminuer la puissance crête de chaque signal élémentaire d'un facteur N par rapport au signal optique d'origine, et, par la division spectrale, d'allonger la durée de chaque signal élémentaire d'un facteur N, ce qui revient à diminuer sa puissance crête d'un nouveau facteur N. L'échantillonnage du signal à deux dimensions permet donc de diminuer la puissance crête du signal d'origine d'un facteur N², ce qui permet d'adapter d'autant mieux chaque signal élémentaire à une amplification de gain élevé malgré des spectres de gains élémentaires limités.

On notera qu'une telle répartition permet également d'injecter dans les amplificateurs élémentaires une énergie moindre, d'un facteur N, ce qui permet de prévenir tout risque de destruction des amplificateurs élémentaires tout en extrayant une forte énergie.

Grâce également à l'invention et en particulier à l'ajustement des phases spectrales des N signaux optiques élémentaires, on s'assure de reconstruire un signal optique amplifié de durée sensiblement égale à une durée prédéterminée, qui peut être celle du signal optique initial ou d'un autre signal dont la forme est recherché en vue d'une application donnée, à partir des N signaux optiques élémentaires amplifiés.

Grâce encore à l'invention, on réduit les pertes liées à des étapes d'étirement et de compression, dans la mesure où le signal optique ne doit plus nécessairement être étiré ou compressé un grand nombre de fois, comme dans le système CPA de l'art antérieur décrit ci-dessus.

Grâce encore à l'invention, on limite l'apparition de phénomènes non-linéaires qui tendent à élargir et déformer les spectres, et de ce fait à allonger très sensiblement la durée des impulsions amplifiées, qui ne peuvent alors plus retrouver leur durée d'origine après l'étape finale de compression temporelle.

Grâce encore à l'invention, il est désormais possible de profiter au mieux des avantages industriels des amplificateurs à fibres optiques, tels que leur compacité, leur robustesse ou leur rendement électrique/optique.

Afin de conserver la largeur du spectre du signal optique initial, la plage spectrale prédéterminée peut correspondre sensiblement à la plage spectrale du signal optique initial avant amplification.

Dans une forme de réalisation préférée, on amplifie les N signaux optiques élémentaires, au moyen des N amplificateurs élémentaires, de manière que la densité spectrale de puissance du signal optique amplifié présente un profil sensiblement identique à un profil prédéterminé. Ainsi, dans la mesure où l'invention permet de gérer de façon indépendante plusieurs parties du spectre du signal optique à amplifier, il est possible de construire, par recombinaison des différentes parties du spectre, non pas le spectre d'origine, mais un spectre dont le profil d'amplitude et le profil de phase soient sensiblement différents, par exemple adaptés à une application particulière. A cette fin, il peut être par exemple appliqué différents niveaux de pompage optique ou utilisé différents milieux amplificateurs dopés.

Par extension, la gestion des phases spectrales permet de structurer le profil temporel du signal amplifié de telle façon qu'il soit par exemple adapté à une application qui nécessite un signal de profil temporel particulier. Dans un cas limite, l'invention peut également augmenter sensiblement la largeur du spectre amplifié par rapport au spectre initial de façon à produire des impulsions amplifiées plus brèves que celles en entrée du système, après l'étape finale de recombinaison des N signaux élémentaires.

Le profil prédéterminé peut correspondre sensiblement au profil de la densité spectrale de puissance du signal optique initial. Pour cela, il peut être choisi des gains élémentaires d'amplification tous identiques. On s'assure ainsi de préserver, après amplification, à la fois la largeur et la forme du spectre du signal optique initial avant amplification.

Dans une autre forme de réalisation préférée, on ajuste les phases spectrales des N signaux optiques élémentaires, à partir de la phase spectrale dudit signal optique amplifié, de manière que la durée du signal optique amplifié soit sensiblement égale à une durée prédéterminée. On s'assure ainsi de préserver à la fois la plage spectrale et la durée du signal optique initial, ce qui est particulièrement avantageux dans le cas d'un signal optique sous la forme d'impulsions ultra-brèves à large bande spectrale. En outre, il est ainsi rendu possible de construire un signal dont la durée est adaptée à l'application envisagée.

La durée prédéterminée, à partir de laquelle sont ajustées les phases spectrales des N signaux optiques élémentaires, peut correspondre sensiblement à la durée du signal optique initial. On s'assure ainsi de préserver, après amplification, à la fois la largeur et la durée du spectre du signal optique initial avant amplification.

L'invention concerne également un dispositif d'amplification d'un signal défini en revendication 4. De préférence, les moyens d'ajustement comprennent :
- une première partie de modulation, disposée entre les moyens de division spatiale du signal optique et les moyens de rassemblement des N signaux optiques élémentaires amplifiés, apte à moduler au moins partiellement les phases spectrales des N signaux optiques élémentaires initiaux ; et
- une seconde partie de contrôle, disposée en aval desdits moyens de rassemblement desdits N signaux optiques élémentaires amplifiés, reliée à la première partie de modulation et apte à recevoir le signal optique amplifié, à analyser la phase spectrale dudit signal optique amplifié, à en déduire les modulations de phase à appliquer auxdits N signaux optiques élémentaires pour que la densité spectrale de puissance du signal optique amplifié présente un profil sensiblement identique à un profil prédéterminé, et à fournir des ordres correspondants à ladite première partie de modulation.

La partie de contrôle des moyens d'ajustement permet de mesurer l'efficacité de combinaison des signaux élémentaires amplifiés, et d'en déduire en temps réel les relations de phases idéales qui sont nécessaires, avant amplification, à une parfaite efficacité de combinaison. Ces relations de phase sont ensuite appliquées en temps réel aux N signaux élémentaires par la partie de modulation.

La seconde partie de contrôle des moyens d'ajustement peut être agencée pour recevoir le signal optique initial et le comparer, lors de l'analyse de la phase spectrale du signal optique amplifié, avec ledit signal optique amplifié.

Par ailleurs, les moyens de rassemblement des N signaux optiques élémentaires amplifiés sont agencés pour faire interférer temporellement lesdits N signaux optiques élémentaires amplifiés.

Afin de s'assurer de ne pas porter atteinte au spectre du signal optique, le nombre N de signaux optiques élémentaires et les plages spectrales desdits signaux optiques élémentaires sont déterminés de manière que les plages spectrales des N amplificateurs élémentaires comprennent respectivement sensiblement les plages spectrales desdits N signaux optiques élémentaires.

Selon une forme particulière de réalisation, le nombre N de signaux optiques élémentaires et les plages spectrales desdits signaux optiques élémentaires sont également déterminés de manière que les énergies desdits N signaux optiques élémentaires soient sensiblement égales.

Afin de construire un signal optique amplifié dont le spectre présente un profil souhaité, au moins deux des N amplificateurs élémentaires présentent des gains élémentaires d'amplification différents.
Les figures du dessin annexé feront bien comprendre comment l'invention peut être réalisée. Sur ces figures, des références identiques désignent des éléments semblables.
La figure 1 est un schéma illustrant un exemple de forme temporelle du signal optique initial à amplifier selon l'invention.
La figure 2 comporte des schémas A et B représentant respectivement la densité spectrale de puissance du signal optique à amplifier et la densité spectrale de gain d'amplification.
La figure 3 représente schématiquement un dispositif d'amplification d'un signal optique selon l'invention.
La figure 4 comporte des schémas A, B1, B2, ..., BN illustrant la division spatiale du signal optique en N signaux élémentaires selon l'invention.
Les figures 5A, 5B, 5C, 5D et 5E illustrent des exemples de réalisation des moyens de division spatiale et/ou de rassemblement.
La figure 6 est un schéma représentant les densités spectrales de puissance du signal optique avant et après amplification.
La figure 7 représente schématiquement une forme particulière de réalisation du dispositif d'amplification selon l'invention.

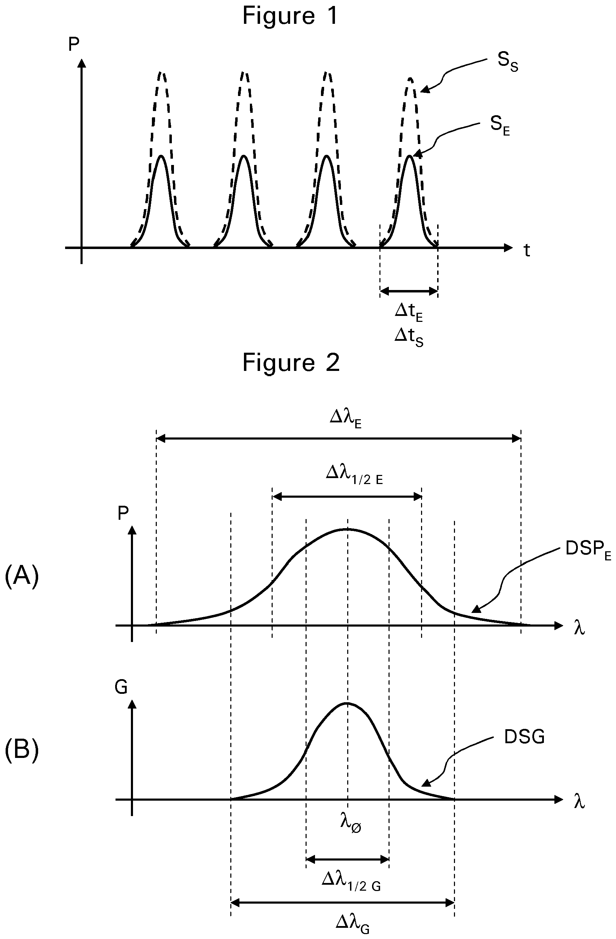

Sur la figure 1, on a représenté schématiquement un signal optique S_{E}, qui se présente sous la forme d'une impulsion ultra-brève (faisant par exemple partie d'un train d'impulsions ultra-brèves) dont la durée Δt_{E} est inférieure à la centaine de femtosecondes. Cependant, il va de soi que l'invention peut également s'appliquer à d'autres formes de signaux optiques, par exemple des signaux continus, et à des impulsions de plus longue durée. Un signal S_{E} du type de la figure 1 peut être généré par exemple à partir d'un oscillateur laser femtoseconde.

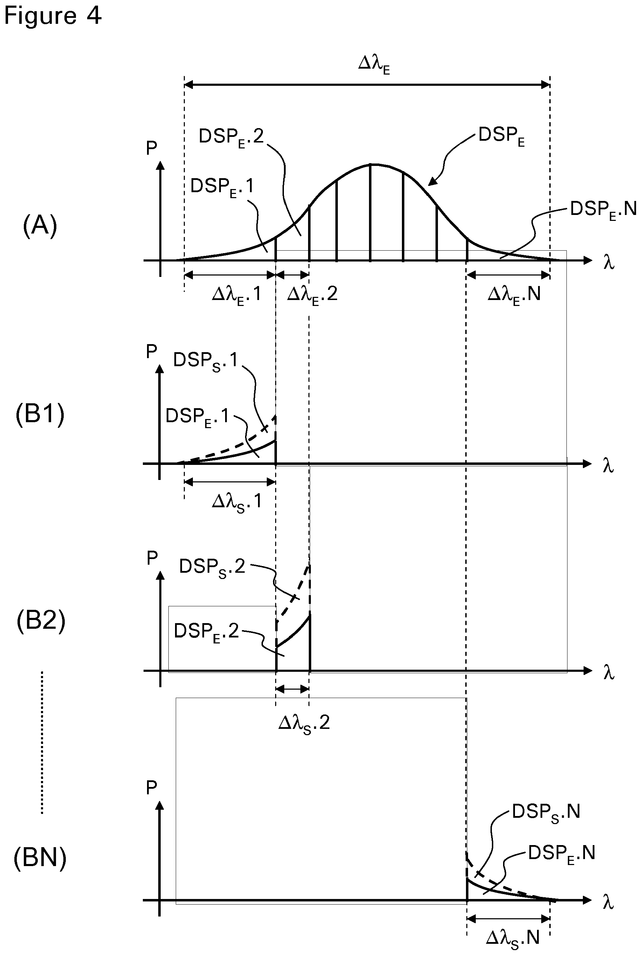

Le spectre, ou densité spectrale de puissance DSP_{E}, de ce signal optique S_{E} est représentée sur le schéma A de la figure 2. On voit sur ce spectre que la densité spectrale de puissance du signal S_{E} est continue sur une plage spectrale Δλ_{E} et décroît au niveau de la périphérie de cette plage, de sorte que le spectre DSP_{E} est centré sur une longueur d'onde λ_{Ø}.

On entend ici par plage spectrale Δλ_{E} l'intervalle sur laquelle la densité spectrale de puissance DSP_{E} du signal S_{E} est non-nulle, cette plage - ou intervalle - présentant une certaine largeur.

L'invention a pour but d'amplifier le signal optique S_{E} de manière à fournir un signal optique amplifié S_{S} (figure 1) dont la durée Δt_{S} est sensiblement égale à une durée prédéterminée et dont le spectre est identique, autant au niveau de sa forme que de sa plage, à un spectre prédéterminé. Dans l'exemple qui suit, également illustré par la figure 1, la largeur spectrale, la durée du signal et le profil de la densité spectrale de puissance - tous prédéterminés - correspondent sensiblement à ceux respectivement Δλ_{E}, Δt_{E} et DSP_{E} du signal optique initial S_{E}.

Or, comme l'illustre le schéma B de la figure 2, la densité spectrale de gain DSG du gain d'amplification G d'un amplificateur, dont la forme est également décroissante sur sa périphérie et centrée sur λ_{Ø}, peut présenter une plage spectrale Δλ_{G} dont la largeur est inférieure à celle Δλ_{E} du signal optique S_{E} à amplifier. Dès lors, lorsque le signal optique S_{E} est amplifié par le gain G, les longueurs d'onde qui sont situées dans la plage Δλ_{E}, mais pas dans la plage Δλ_{G}, ne sont pas amplifiées, et les longueurs d'onde qui sont situées dans la plage Δλ_{E}, mais pas dans la plage Δλ_{1/2 G} (plage spectrale à mi-hauteur de la densité spectrale de gain), sont amplifiées avec une distorsion significative.

Il importe donc de préserver la plage spectrale Δλ_{E} du signal S_{E} ou, du moins, la plage spectrale Δλ_{1/2 E} (plage spectrale à mi-hauteur de la densité spectrale de puissance du signal S_{E}) qui contient les longueurs d'onde de plus forte énergie.

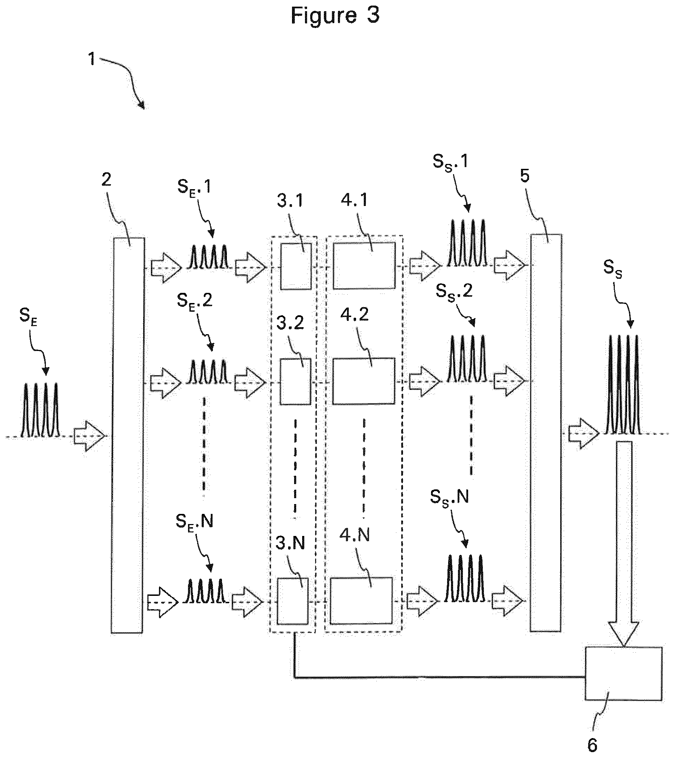

Le dispositif d'amplification 1, conforme à la présente invention et représenté schématiquement sur la figure 3, permet d'atteindre ce but. Il comporte à cet effet des moyens de division spatiale 2, agencés pour disperser spatialement le signal optique S_{E} en N signaux optiques élémentaires S_{E}.1, S_{E}.2, ..., S_{E}.N, N étant un nombre entier au moins égal à 2. Ces signaux élémentaires présentent des plages spectrales Δλ_{E}.1, Δλ_{E}.2, ..., Δλ_{E}.N représentées sur le schéma A de la figure 4. Plus précisément, les moyens de division spatiale 2 sont agencés pour que les plages spectrales Δλ_{E}.1, Δλ_{E}.2, ..., Δλ_{E}.N soient deux à deux adjacentes et forment sensiblement par juxtaposition la plage spectrale Δλ_{E} du signal optique S_{E}. Les moyens de division spatiale 2 réalisent ainsi un démultiplexage du spectre du signal S_{E}, dans le but de séparer la plage spectrale Δλ_{E} du spectre en N plages spectrales élémentaires Δλ_{E}.1, Δλ_{E}.2, ..., Δλ_{E}.N distinctes.

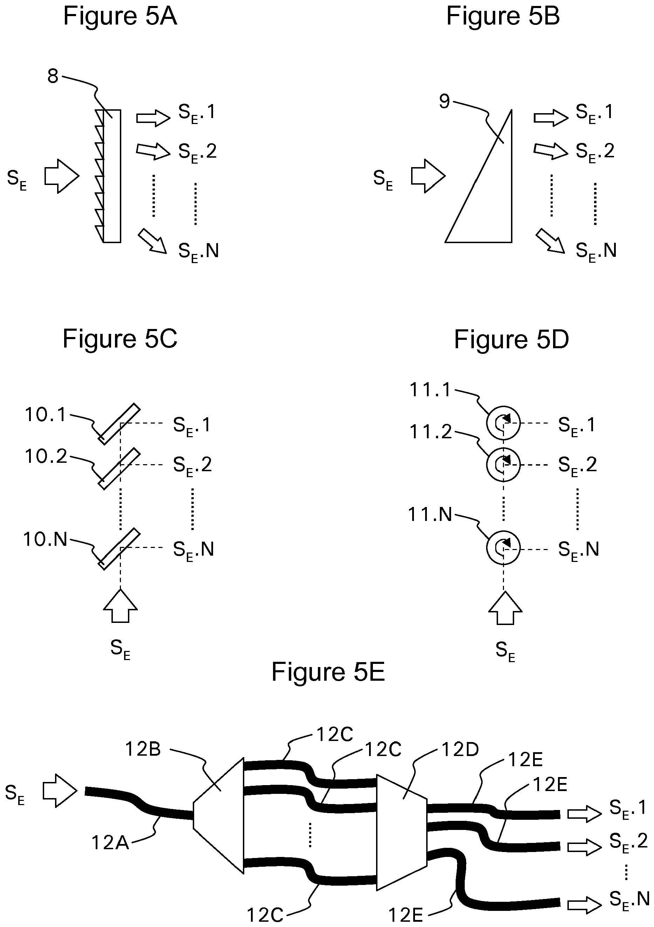

Ces moyens de division spatiale 2 comprennent au moins un élément dispersif d'un point de vue spectral. A ce titre, ils peuvent comprendre par exemple, à titre non exhaustif :
- un réseau de diffraction 8 (figure 5A) ;
- un prisme 9 (figure 5B) ;
- un jeu de miroirs dichroïques 10.1, 10.2, ..., 10.N (figure 5C) présentant des fréquences de coupure déterminées de manière à réfléchir les bandes spectrales prévues pour les signaux élémentaires respectivement S_{E}.1, S_{E}.2, ..., S_{E}.N, ces miroirs 10.1 à 10.N étant disposés en cascade par ordre de fréquence de coupure croissante (ou décroissante selon que les filtres sont passe-haut ou passe-bas) ;
- un jeu de circulateurs et de réseaux de Bragg 11.1, 11.2, ..., 11.N (figure 5D) disposés de façon analogue aux miroirs dichroïques de la figure 5C ; ou encore
- un assemblage de type AWG à multiplexeur-démultiplexeur intégré (en langue anglo-saxonne « Arrayed Waveguide Grating », figure 5E) comprenant un premier guide d'onde 12A recevant le signal S_{E}, un premier guide planaire 12B relié au guide 12A pour séparer les plages spectrales élémentaires et les transmettre à des guides d'onde 12C, puis, par l'intermédiaire d'un deuxième guide planaire 12B, à des guides d'onde 12E.

Le dispositif d'amplification 1 de la figure 3 comprend également des amplificateurs élémentaires 4.1, 4.2, ..., 4.N des N signaux optiques élémentaires respectivement S_{E}.1, S_{E}.2, ..., S_{E}.N. Ces amplificateurs élémentaires sont répartis spatialement de manière que chacun d'eux soit disposé sur le chemin du signal optique élémentaire qu'il est destiné à amplifier. Ils présentent par ailleurs respectivement des gains élémentaires d'amplification G.1, G.2, ..., G.N dont les spectres sont adaptés aux signaux élémentaires à amplifier. Par spectre de gain adapté, on entend ici que la plage spectrale du signal élémentaire à amplifier est comprise sensiblement dans la plage spectrale du gain élémentaire correspondant, le niveau de gain pouvant être réglé indépendamment dans chacun des amplificateurs élémentaires.

Partant ainsi d'un spectre initial DSP_{E} correspondant à la densité spectrale de puissance du signal initial S_{E} (schéma A de la figure 4), les moyens de division spatiale 2 permettent de diviser le spectre DSP_{E} en une pluralité de spectres élémentaires DSP_{E}.1, DSP_{E}.2, ..., DSP_{E}.N, représentés respectivement sur les schémas B1, B2, ..., BN de la figure 4. Sur chacun de ces schémas B1 à BN, les spectres élémentaires présentent la même forme que les portions du spectre initial DSP_{E}, dont les largeurs spectrales sont respectivement Δλ_{E}.1, Δλ_{E}.2, ..., Δλ_{E}.N. Chaque spectre élémentaire DSP_{E}.1, DSP_{E}.2, ..., DSP_{E}.N présente par ailleurs une largeur spectrale Δλ_{E}.1, Δλ_{E}.2, ..., Δλ_{E}.N comprise dans la largeur spectrale Δλ_{G}.1, Δλ**_{G}.**2**,** ..., Δλ**_{G}**.N du spectre de l'amplificateur élémentaire correspondant. Chacun des spectres DSG.1, DSG.2, ..., DSG.N des amplificateurs élémentaires 4.1, 4.2, ..., 4.N peut être du type de celui DSG représenté sur le schéma B de la figure 2, mais comprenant la plage spectrale Δλ_{E}.1, Δλ_{E}.2, ..., Δλ_{E}.N du signal optique élémentaire qu'il est destiné à amplifier.

Grâce aux amplificateurs élémentaires 4.1, 4.2, ..., 4.N, les signaux élémentaires S_{E}.1, S_{E}.2, ..., S_{E}.N peuvent être amplifiés de façon uniforme au niveau de leurs plages spectrales Δλ_{E}.1, Δλ_{E}.2, ..., Δλ_{E}.N. On obtient ainsi, en sortie des amplificateurs élémentaires, des signaux élémentaires amplifiés S_{S}.1, S_{S}.2, ..., S_{S}.N (représentés sur la figure 3) dont les spectres DSP_{S}.1, DSP_{S}.2, ..., DSP_{S}.N (représentés respectivement sur les schémas B1, B2, ..., BN de la figure 4) ont la même largeur et la même forme que les spectres élémentaires initiaux DSP_{E}.1, DSP_{E}.2, ..., DSP_{E}.N.

Les amplificateurs élémentaires peuvent être constitués par exemple de N fibres optiques amplificatrices 4.1, 4.2, ..., 4.N dont les coeurs reçoivent les signaux élémentaires S_{E}.1, S_{E}.2, ..., S_{E}.N. Selon une autre forme de réalisation, les amplificateurs élémentaires peuvent être constitués de N coeurs d'une unique fibre optique amplificatrice, ou encore de N coeurs répartis sur un nombre de fibres optiques amplificatrices compris entre 1 et N, dans la mesure où les signaux élémentaires S_{E}.1, S_{E}.2, ..., S_{E}.N sont bien répartis dans ces N coeurs.

Le dispositif d'amplification 1 de la figure 3 comprend également, en aval des amplificateurs élémentaires 4.1, 4.2, ..., 4.N, des moyens de rassemblement 5 des N signaux optiques élémentaires amplifiés S_{S}.1, S_{S}.2, ..., S_{S}.N. Pour cela, les moyens 5 reçoivent l'ensemble des signaux élémentaires amplifiés et les juxtaposent de façon qu'ils forment en sortie du dispositif 1 un signal optique amplifié S_{S}. Les moyens de rassemblement 5 réalisent ainsi un multiplexage des N signaux optiques élémentaires amplifiés S_{S}.1, S_{S}.2, ..., S_{S}.N, dans le but de rassembler les spectres élémentaires amplifiés DSP_{S}.1, DSP_{S}.2, ..., DSP_{S}.N et ainsi former un spectre amplifié DSP_{S}.

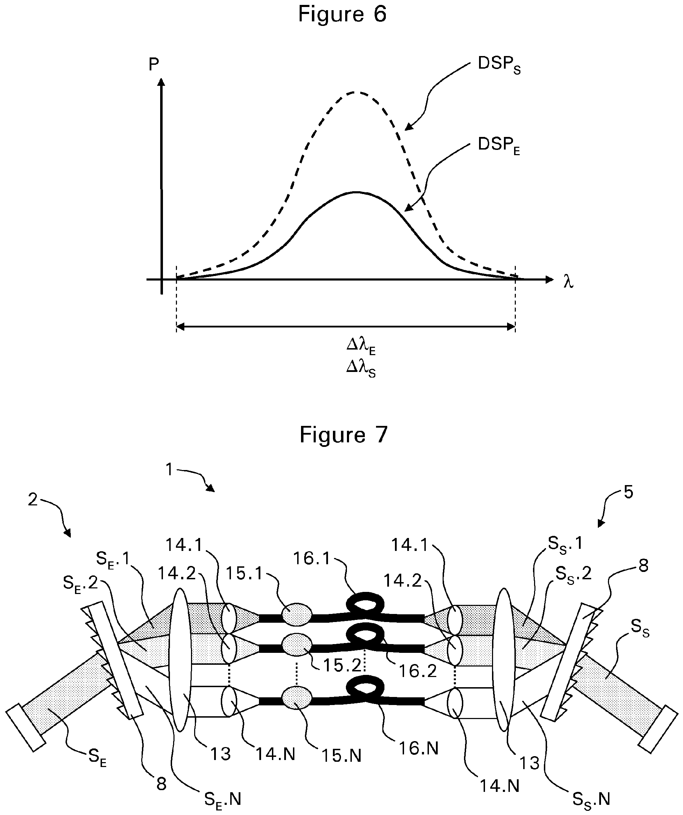

Dans la mesure où les spectres élémentaires amplifiés DSP_{S}.1, DSP_{S}.2, ..., DSP_{S}.N présentent les mêmes largeurs et formes que les spectres élémentaires initiaux DSP_{E}.1, DSP_{E}.2, ..., DSP_{E}.N dont ils sont issus, il s'ensuit que le spectre DSP_{S} du signal amplifié S_{S} est sensiblement identique à celui DSP_{E} du signal amplifié S_{E}, comme c'est le cas sur la figure 6, de même que sa plage spectrale Δλ_{S} est sensiblement confondue avec la plage spectrale Δλ_{E} du signal initial S_{E}.

Comme les moyens de division spatiale 2, les moyens de rassemblement 5 comprennent au moins un élément dispersif d'un point de vue spectral. A ce titre, ils peuvent comprendre tout type d'élément dispersif susceptible de convenir aux moyens de division spatiale 2, par exemple un réseau de diffraction (figure 5A), un prisme (figure 5B), un jeu de miroirs dichroïques (figure 5C), un jeu de circulateurs et de réseaux de Bragg (figure 5D), ou encore un assemblage de type AWG (figure 5E).

On comprendra que pour une impulsion initiale ultra-brève à large bande spectrale, il se peut qu'il n'existe pas un unique milieu amplificateur dont le spectre de gain soit adapté (c'est-à-dire plus large) à celui de l'impulsion, tandis qu'il existe un ensemble de milieux amplificateurs dont les spectres de gain distincts se recouvrent et dont chacun est adapté à celui d'une impulsion élémentaire dont le spectre ne correspondrait qu'à une partie seulement de l'impulsion initiale. Le dispositif 1 selon l'invention permet donc d'amplifier le signal S_{E} sans que son spectre DSP_{E} soit dégradé et perde des informations sur certaines de ces longueurs d'onde.

Afin d'obtenir un signal optique amplifié dont la durée soit sensiblement égale à celle du signal optique initial, sinon très proche, le dispositif 1 de la figure 3 comporte également des moyens d'ajustement des phases spectrales des N signaux optiques élémentaires initiaux S_{E}.1, S_{E}.2, ..., S_{E}.N et/ou amplifiés S_{S}.1, S_{S}.2, ..., S_{S}.N.

Ces moyens d'ajustement comprennent tout d'abord une première partie de modulation, constituée des éléments 3.1, 3.2, ..., 3.N. Ces éléments sont disposés entre les moyens de division spatiale 2 et les amplificateurs élémentaires 4.1, 4.2, ..., 4.N afin de moduler au moins partiellement les phases spectrales des N signaux optiques élémentaires.

On comprendra que les éléments 3.1, 3.2, ..., 3.N de la partie de modulation peuvent être disposés à n'importe quel endroit entre les moyens de division 2 et les moyens de rassemblement 5, dans la mesure où leurs positions leur permettent d'agir sur les phases spectrales des signaux élémentaires.

Ces moyens d'ajustement comprennent également une seconde partie de contrôle 6, disposée en aval des moyens de rassemblement 5 afin de recueillir le signal optique amplifié Sₛ, d'analyser par exemple sa phase spectrale et d'en déduire les modulations de phase à appliquer aux N signaux optiques élémentaires (ici initiaux, car les éléments 3.1, 3.2, ..., 3.N sont disposés en amont des amplificateurs élémentaires) pour que la durée Δt_{S} du signal optique amplifié S_{S} soit sensiblement égale à la durée Δt_{E} dudit signal optique initial S_{E}. Cette partie de contrôle 6 est également reliée aux éléments 3.1, 3.2, ..., 3.N de la partie de modulation, afin de transmettre à ces derniers des ordres en vue d'ajuster les phases des signaux élémentaires pour que lesdites phases spectrales atteignent les valeurs estimées par ladite partie de contrôle 6.

De cette manière, on réalise une boucle de rétroaction qui agit en temps réel sur les phases spectrales des N signaux optiques élémentaires, en introduisant des retards adéquats au niveau des signaux optiques élémentaires, afin que ces signaux élémentaires puissent se combiner temporellement de manière synchronisée pour former un signal optique Sₛ de courte durée, idéalement de durée sensiblement égale à celle du signal initial.

Afin de réaliser l'ajustement des phases spectrales des signaux élémentaires, les éléments 3.1, 3.2, ..., 3.N de la partie de modulation peuvent être par exemple des modulateurs électro-optiques, des systèmes micro-opto-électromécaniques (MOEMS), des fibres thermostatées (par effet Peltier ou dans un four), des matrices de cristaux liquides, des systèmes de micro-positionnement piézoélectrique de miroirs, ou encore de tout autre type de modulateur de phase connu de l'homme du métier.

Afin de réaliser l'analyse de la phase spectrale d'un signal Sₛ, la partie de contrôle 6 peut comprendre par exemple, dans le cas d'un signal sous la forme d'impulsions brèves, un auto-corrélateur de type FROG (« Frequency-Resolved Optical Gating » en langue anglo-saxonne), un interféromètre spectral à décalage de type SPIDER (« Spectral Phase Interferometry for Direct Electric-Field Reconstruction » en langue anglo-saxonne), qui sont des appareils bien connus de l'homme du métier et qui présentent en outre l'avantage d'être auto-référencés et ne nécessitent donc pas de disposer du signal initial S_{E} comme référence.

Selon une autre forme de réalisation qui convient particulièrement lorsque la partie de contrôle 6 n'est pas auto-référencée, cette dernière est agencée pour également prélever une partie du signal initial S_{E}, de manière que S_{E} interfère spectralement avec le signal amplifié S_{S}, afin d'estimer le profil de la phase spectrale de ce dernier et d'ajuster chaque signal élémentaire pour que leur combinaison soit optimale.

On décrit à présent un exemple de dispositif d'amplification selon une forme particulière de réalisation, en référence à la figure 7.

Dans cet exemple, les moyens de division spatiale 2 comportent un réseau de diffraction 8, permettant de séparer spatialement le faisceau lumineux correspondant au signal optique S_{E} en N signaux élémentaires S_{E}.1, S_{E}.2, ..., S_{E}.N. Les amplificateurs élémentaires 4.1, 4.2, ..., 4.N sont constitués dans cet exemple par des fibres optiques amplificatrices 16.1, 16.2, ..., 16N, dont les parties avant sont munies de lignes de retard 15.1, 15.2, ..., 15.N constituant les éléments 3.1, 3.2, ..., 3.N de la partie de modulation des signaux élémentaires. Ces lignes de retard sont en liaison avec une partie de contrôle décrite ci-dessus (non représentée sur la figure 7) pour ajuster les phases des signaux élémentaires et favoriser ainsi une combinaison efficace de ceux-ci après amplification.

Afin d'injecter les signaux élémentaires S_{E}.1, S_{E}.2, ..., S_{E}.N dans les fibres optiques 16.1, 16.2, ..., 16N, les moyens de division 2 comportent de plus une lentille collimatrice 13, afin que les faisceaux correspondant auxdits signaux élémentaires soient des faisceaux parallèles, ainsi qu'un réseau de micro-lentilles 14.1, 14.2, ..., 14.N dont chacune est associée à un signal élémentaire et dont le foyer est disposé à l'entrée de la fibre correspondante.

Dans cet exemple, les moyens de rassemblement 5 sont symétriques des moyens de division 2, ce qui assure une reconstruction du signal optique qui soit, d'un point de vue spectral, le plus proche possible du signal initial.

Les exemples ci-dessus ont été décrits pour une application dans laquelle on amplifie un signal optique tout en conservant sa durée et son spectre, autant du niveau de sa largeur que de sa forme. Il a donc été agi uniquement sur l'amplitude du profil temporel du signal. Il va cependant de soi que la présente invention peut être adaptée pour fournir un signal optique amplifié dont le profil temporel (autant en amplitude qu'en phase) et le profil spectral (autant en largeur qu'en forme) sont contrôlés afin que le signal corresponde sensiblement à un signal dont les caractéristiques sont prédéterminés. Pour cela, l'invention peut notamment agir sur le niveau de gain de chaque amplificateur élémentaire 4.1, 4.2, ..., 4.N, ainsi que sur les moyens d'ajustement 3.1, 3.2, ..., 3.N, 6, 7.

On notera que l'invention convient particulièrement à la production d'impulsions de puissance élevée et de durée brève (par exemple inférieure à la centaine de femtosecondes), qui permettent notamment :
- de pratiquer des micro-nanostructurations athermiques de matériaux spéciaux, durs, précieux ou sensibles, dans le but par exemple d'améliorer la vitesse de réalisation de ces structurations tout en conservant une très bonne finesse de la gravure ;
- de photo-inscrire des guides incorporés dans des volumes ;
- de générer des harmoniques d'ordre élevé, ce qui favorise l'utilisation de laser femtosecondes pour réaliser des sources XUV cohérentes adaptées à une imagerie à haut contraste avec une résolution spatiale élevée ; ou encore
- de générer des rayons X pour des applications d'imagerie médicale à résolution spatiale élevée (par exemple pour la mammographie) ou des faisceaux de protons pour des applications de protonthérapie.

## Revendications

1. Procédé d'amplification d'un signal optique (S_{E}), ultra-bref, à large bande spectrale, dans lequel :
- on divise spatialement le signal optique (S_{E}) en N signaux optiques élémentaires (S_{E}.1, S_{E}.2, ..., S_{E}.N) dont les plages spectrales (Δλ_{E}.1, Δλ_{E}.2, ..., Δλ_{E}.N) sont deux à deux adjacentes et forment sensiblement par juxtaposition la plage spectrale (Δλ_{E}) du signal optique (S_{E}), N étant un nombre entier au moins égal à 2 ;
- on amplifie les N signaux optiques élémentaires (S_{E}.1, S_{E}.2, ..., S_{E}.N) au moyen respectivement de N amplificateurs élémentaires (4.1, 4.2, ..., 4.N) dont les plages spectrales d'amplification (Δλ_{G}.1, Δλ_{G}.2, ..., Δλ_{G}.N) comprennent respectivement les plages spectrales (Δλ_{E}.1, Δλ_{E}.2, ..., Δλ_{E}.N) desdits N signaux optiques élémentaires ;
- on rassemble les N signaux optiques élémentaires amplifiés (S_{S}.1, S_{S}.2, ..., S_{S}.N) pour former un signal optique amplifié (S_{S}) dont la plage spectrale (Δλ_{S}) est confondue avec une plage spectrale prédéterminée ; et
**caractérisé en ce que** :
- on ajuste les phases spectrales des N signaux optiques élémentaires initiaux (S_{E}.1, S_{E}.2, ..., S_{E}.N) avant amplification à partir de la phase spectrale dudit signal optique amplifié (S_{S}), en ajustant lesdites phases spectrales de N signaux optiques élémentaires initiaux afin que la durée du signal (Δt_{S}) du signal optique amplifié (S_{S}) soit égale à la durée (Δλ_{E}) du signal optique initial (S_{E}).

2. Procédé selon la revendication 1,
**caractérisé en ce qu'**on règle la densité spectrale de puissance (DSP_{S}) du signal optique amplifié (S_{S}) par amplification des signaux N signaux optiques élémentaires (S_{E}.1, S_{E}.2, ..., S_{E}.N), au moyen des N amplificateurs élémentaires (4.1, 4.2, ..., 4.N),

3. Procédé selon la revendication 1 ou 2,
**caractérisé en ce qu'**on règle la durée (Δt_{S}) du signal optique amplifié (S_{S}) par ajustement des phases spectrales des N signaux optiques élémentaires (S_{E}.1, S_{E}.2, ..., S_{E}.N), à partir de la phase spectrale dudit signal optique amplifié (S_{S}).

4. Dispositif d'amplification (1) d'un signal optique (S_{E}) ultra-bref, à large bande spectrale, comprenant :
- des moyens de division spatiale (2) du signal optique (S_{E}) en N signaux optiques élémentaires (S_{E}.1, S_{E}.2, ..., S_{E}.N) dont les plages spectrales (Δλ_{E}.1, Δλ_{E}.2, ..., Δλ_{E}.N) sont deux à deux adjacentes et forment sensiblement par juxtaposition la plage spectrale (Δλ_{E}) du signal optique (S_{E}), N étant un nombre entier au moins égal à 2 ;
- des amplificateurs élémentaires (4.1, 4.2, ..., 4.N) agencés pour amplifier les N signaux optiques élémentaires, les plages spectrales (Δλ_{G}.1, Δλ_{G}.2, ..., Δλ_{G}.N) desdits amplificateurs élémentaires comprenant respectivement sensiblement les plages spectrales (Δλ_{E}.1, Δλ_{E}.2, ..., Δλ_{E}.N) desdits N signaux optiques élémentaires ;
- des moyens de rassemblement (5) des N signaux optiques élémentaires amplifiés (S_{S}.1, S_{S}.2, ..., S_{S}.N), agencés pour former un signal optique amplifié (S_{S}) dont la plage spectrale (Δλ_{S}) est sensiblement confondue avec une plage spectrale (Δλ_{E}) prédéterminée ; et
**caractérisé en ce que** :
- des moyens d'ajustement (3.1, 3.2, ..., 3.N, 6, 7) des phases spectrales des N signaux optiques élémentaires initiaux (S_{E}.1, S_{E}.2, ..., S_{E}.N) avant amplification à partir de la phase spectrale dudit signal optique amplifié (S_{S}), en ajustant lesdites phases spectrales de N signaux optiques élémentaires initiaux afin que la durée du signal (Δt_{S}) du signal optique amplifié (S_{S}) soit égale à la durée (Δt_{E}) du signal optique initial (S_{E}).

5. Dispositif selon la revendication 4,
**caractérisé en ce que** les amplificateurs élémentaires (4.1, 4.2, ..., 4.N) comprennent un réseau de N coeurs (4.1, 4.2, ..., 4.N) d'au moins une fibre optique amplificatrice, présentant respectivement N gains élémentaires d'amplification (G.1, G.2, ..., G.N), les moyens de division spatiale (2) du signal optique (S_{E}) étant agencés pour répartir spatialement les N signaux optiques élémentaires (S_{E}.1, S_{E}.2, ..., S_{E}.N) dans lesdits N coeurs.

6. Dispositif selon l'une des revendications 4 ou 5,
**caractérisé en ce qu'**il comporte les moyens d'ajustement (3.1, 3.2, ..., 3.N, 6, 7) comprennent :
- une première partie de modulation (3.1, 3.2, ..., 3.N), disposée entre les moyens de division spatiale (2) du signal optique (S_{E}) et les moyens de rassemblement (5) des N signaux optiques élémentaires amplifiés (S_{S}.1, S_{S}.2, ..., S_{S}.N), apte à moduler au moins partiellement les phases spectrales des N signaux optiques élémentaires initiaux (S_{E}.1, S_{E}.2, ..., S_{E}.N) ; et
- une seconde partie de contrôle (6), disposée en aval desdits moyens de rassemblement (5) desdits N signaux optiques élémentaires amplifiés (S_{S}.1, S_{S}.2, ..., S_{S}.N), reliée à la première partie de modulation (3.1, 3.2, ..., 3.N) et apte à recevoir le signal optique amplifié (S_{S}), à analyser la phase spectrale dudit signal optique amplifié (S_{S}), à en déduire les modulations de phase à appliquer auxdits N signaux optiques élémentaires pour que la densité spectrale de puissance (DSP_{S}) du signal optique amplifié (S_{S}) présente un profil sensiblement identique à un profil prédéterminé, et à fournir des ordres correspondants à ladite première partie de modulation.

7. Dispositif selon la revendication 6,
**caractérisé en ce que** la seconde partie de contrôle (6) des moyens d'ajustement (3.1, 3.2, ..., 3.N, 6, 7) est agencée pour recevoir le signal optique initial (S_{E}) et le comparer, lors de l'analyse de la phase spectrale du signal optique amplifié (S_{S}), avec ledit signal optique amplifié (S_{S}).

8. Dispositif selon l'une des revendications 4 à 7,
**caractérisé en ce que** les moyens de rassemblement (5) des N signaux optiques élémentaires amplifiés (S_{S}.1, S_{S}.2, ..., S_{S}.N) sont agencés pour faire interférer temporellement lesdits N signaux optiques élémentaires amplifiés.

9. Dispositif selon l'une des revendications 4 à 8,
**caractérisé en ce que** le nombre N de signaux optiques élémentaires (S_{E}.1, SE.2, ..., S_{E}.N) et les plages spectrales (Δλ_{E}.1, Δλ_{E}.2, ..., Δλ_{E}.N) desdits signaux optiques élémentaires sont déterminés de manière que les plages spectrales (Δλ_{G}.1, Δλ_{G}.2, ..., Δλ_{G}.N) des N amplificateurs élémentaires (4.1, 4.2, ..., 4.N) comprennent respectivement sensiblement les plages spectrales desdits N signaux optiques élémentaires.

10. Dispositif selon la revendication 9,
**caractérisé en ce que** le nombre N de signaux optiques élémentaires (S_{E}.1, S_{E}.2, ..., S_{E}.N) et les plages spectrales (Δλ_{G}.1, Δλ_{G}.2, ..., Δλ_{E}.N) desdits signaux optiques élémentaires sont également déterminés de manière que les énergies desdits N signaux optiques élémentaires soient égales.

11. Dispositif selon l'une des revendications 4 à 10,
**caractérisé en ce qu'**au moins deux des N amplificateurs élémentaires (4.1, 4.2, ..., 4.N) présentent des gains élémentaires d'amplification (G.1, G.2, ..., G.N) différents

## Patentansprüche

1. Verfahren zur Verstärkung eines ultrakurzen optischen Signals (S_{E}) mit breitem Spektralband,
bei dem:
- das optische Signal (S_{E}) räumlich in N elementare optische Signale (S_{E}.1, S_{E}.2, ..., S_{E}.N) unterteilt wird, deren Spektralbereiche (Δλ_{E}.1, Δλ_{E}.2, ..., Δλ_{E}.N) zwei und zwei aneinandergrenzen und im Wesentlichen durch Nebeneinanderstellung den Spektralbereich (Δλ_{E}) des optischen Signals (S_{E}) bilden, wobei N eine ganze Zahl mindestens gleich 2 ist;
- die N elementaren optischen Signale (S_{E}.1, S_{E}.2, ..., S_{E}.N) mit Hilfe von jeweils N elementaren Verstärkern (4.1, 4.2, ..., 4.N) verstärkt werden, deren Verstärkungsspektralbereiche (Δλ_{G}.1, Δλ_{G}.2, ..., Δλ_{G}.N) jeweils die Spektralbereiche (Δλ_{E}.1, Δλ_{E}.2, ..., Δλ_{E}.N) der N elementaren optischen Signale umfassen;
- die N verstärkten elementaren optischen Signale (S_{S}.1, S_{S}.2, ..., S_{S}.N) vereint werden, um ein verstärktes optisches Signal (S_{S}) zu bilden, dessen Spektralbereich (Δλ_{S}) mit einem vorbestimmten Spektralbereich zusammenfällt; und
**dadurch gekennzeichnet, dass**:
- die Spektralphasen der N elementaren optischen Eingangssignale (S_{E}.1, S_{E}.2, ..., S_{E}.N) vor der Verstärkung auf Basis der Spektralphase des verstärkten optischen Signals (S_{S}) angepasst werden, wobei die Spektralphasen der N elementaren optischen Eingangssignale derart angepasst werden, dass die Dauer des Signals (Δt_{S}) des verstärkten optischen Signals (S_{S}) gleich der Dauer (Δt_{E}) des optischen Eingangssignals (S_{E}) ist.

2. Verfahren nach Anspruch 1,
**dadurch gekennzeichnet, dass** die spektrale Leistungsdichte (DSP_{S}) des verstärkten optischen Signals (S_{S}) durch Verstärkung der N elementaren optischen Signale (S_{E}.1, S_{E}.2, ..., S_{E}.N) mit Hilfe der N elementaren Verstärker (4.1, 4.2, ..., 4.N) verstärkt wird.

3. Verfahren nach Anspruch 1 oder 2,
**dadurch gekennzeichnet, dass** die Dauer (Δt_{S}) des verstärkten optischen Signals (S_{S}) durch Anpassung der Spektralphasen der N elementaren optischen Signale (S_{E}.1, S_{E}.2, ..., S_{E}.N) auf Basis der Spektralphase des verstärkten optischen Signals (S_{S}) eingestellt wird.

4. Vorrichtung (1) zur Verstärkung eines ultrakurzen optischen Signals (S_{E}) mit breitem Spektralband,
umfassend:
- Mittel (2), um das optische Signal (S_{E}) räumlich in N elementare optische Signale (S_{E}.1, S_{E}.2, S_{E}.N) zu unterteilen, deren Spektralbereiche (Δλ_{E}.1, Δλ_{E}.2, ..., Δλ_{E}.N) zwei und zwei aneinandergrenzen und im Wesentlichen durch Nebeneinanderstellung den Spektralbereich (Δλ_{E}) des optischen Signals (S_{E}) bilden, wobei N eine ganze Zahl mindestens gleich 2 ist;
- elementare Verstärker (4.1, 4.2, ..., 4.N), die dazu vorgesehen sind, die N elementaren optischen Signale zu verstärken, wobei die Spektralbereiche (Δλ_{G}.1, Δλ_{G}.2, ..., Δλ_{G}.N) der Verstärker jeweils im Wesentlichen die Spektralbereiche (Δλ_{E}.1, Δλ_{E}.2, ..., Δλ_{E}.N) der N elementaren optischen Signale umfassen;
- Mittel (5) zur Vereinigung der N verstärkten elementaren optischen Signale (S_{S}.1, S_{S}.2, ..., S_{S}.N), die dazu vorgesehen sind, ein verstärktes optisches Signal (S_{S}) zu bilden, dessen Spektralbereich (Δλ_{S}) mit einem vorbestimmten Spektralbereich (Δλ_{E}) zusammenfällt; und
**dadurch gekennzeichnet, dass**:
- Mittel zum Anpassen (3.1, 3.2, ..., 3.N, 6, 7) der Spektralphasen der N elementaren optischen Eingangssignale (S_{E}.1, S_{E}.2, ..., S_{E}.N) vor der Verstärkung auf Basis der Spektralphase des verstärkten optischen Signals (S_{S}) vorgesehen sind, wobei die Spektralphasen der N elementaren optischen Eingangssignale derart angepasst werden, dass die Dauer des Signals (Δt_{S}) des verstärkten optischen Signals (S_{S}) gleich der Dauer (Δt_{E}) des optischen Eingangssignals (S_{E}) ist.

5. Vorrichtung nach Anspruch 4,
**dadurch gekennzeichnet, dass** die elementaren Verstärker (4.1, 4.2, ..., 4.N) ein Netz von N Kernen (4.1, 4.2, ..., 4.N) mindestens einer optischen Verstärkungsfaser umfassen, die jeweils N elementare Verstärkungseinheiten (G.1, G.2, ..., G.N) aufweisen, wobei die Mittel zur räumlichen Unterteilung (2) des optischen Signals (S_{E}) dazu vorgesehen sind,
die N elementaren optischen Signale (S_{E}.1, S_{E}.2, ..., S_{E}.N) in den N Kernen räumlich zu verteilen.

6. Vorrichtung nach einem der Ansprüche 4 oder 5,
**dadurch gekennzeichnet, dass** die Anpassungsmittel (3.1, 3.2, ..., 3.N, 6, 7) umfassen:
- einen ersten Modulationsteil (3.1, 3.2,..., 3.N), der zwischen den Mitteln (2) zur räumlichen Unterteilung des optischen Signals (S_{E}) und den Mitteln (5) zur Vereinigung der N verstärkten elementaren optischen Signale (S_{S}.1, S_{S}.2,..., S_{S}.N) angeordnet, geeignet ist, die Spektralphasen der N elementaren optischen Eingangssignale (S_{E}.1, S_{E}.2, ..., S_{E}.N) zumindest teilweise zu modulieren; und
- einen zweiten Kontroilteil (6), der stromabwärts zu den Mitteln (5) zur Vereinigung der der N verstärkten elementaren optischen Signale (S_{S}.1, S_{S}.2, ..., S_{S}.N) angeordnet, mit dem ersten Modulationsteil (3.1, 3.2, ..., 3.N) verbunden und geeignet ist, das verstärkte optische Signal (S_{S}) zu empfangen, die Spektralphase des verstärkten optischen Signals (S_{S}) zu analysieren, davon die Phasenmodulationen abzuleiten, die an die N elementaren optischen Signale anzulegen sind, damit die spektrale Leistungsdichte (DSP_{S}) des verstärkten optischen Signals (S_{S}) ein im Wesentlichen mit einem vorbestimmten Profil identisches Profil aufweist, und entsprechende Anweisungen an den ersten Modulationsteil zu liefern.

7. Vorrichtung nach Anspruch 6,
**dadurch gekennzeichnet, dass** der zweite Kontrollteil (6) der Anpassungsmittei (3.1, 3.2, ..., 3.N, 6, 7) dazu vorgesehen ist, das optische Eingangssignal (S_{E}) zu empfangen und es bei der Analyse der Spektralphase des verstärkten optischen Signals (S_{S}) mit dem verstärkten optischen Signal (S_{S}) zu vergleichen.

8. Vorrichtung nach einem der Ansprüche 4 bis 7,
**dadurch gekennzeichnet, dass** die Mittel (5) zur Vereinigung der N verstärkten elementaren optischen Signale (S_{S}.1, S_{S}.2, ..., S_{S}.N) dazu vorgesehen sind, die N verstärkten elementaren optischen Signale zeitlich interferieren zu lassen,

9. Vorrichtung nach einem der Ansprüche 4 bis 8,
**dadurch gekennzeichnet, dass** die Anzahl N von elementaren optischen Signalen (S_{E}.1, S_{E}.2, ..., S_{E}.N) und die Spektralbereiche (Δλ_{E}.1, Δλ_{E}.2, ..., Δλ_{E}.N) der elementaren optischen Signale derart bestimmt sind, dass die Spektralbereiche (Δλ_{G}.1, Δλ_{G}.2, ..., Δλ_{G}.N) der N elementaren Verstärker (4.1, 4.2, ..., 4.N) jeweils im Wesentlichen die Spektralbereiche der N elementaren optischen Signale umfassen.

10. Vorrichtung nach Anspruch 9,
**dadurch gekennzeichnet, dass** die Anzahl N von elementaren optischen Signalen (S_{E}.1, S_{E}.2, ..., S_{E}.N) und die Spektralbereiche (Δλ_{E}.1, Δλ_{E}.2, ..., Δλ_{E}.N) der elementaren optischen Signale derart bestimmt sind, dass die Energien der N elementaren optischen Signale gleich sind.

11. Vorrichtung nach einem der Ansprüche 4 bis 10,
**dadurch gekennzeichnet, dass** mindestens zwei der N elementaren Verstärker (4.1, 4.2, ..., 4.N) unterschiedliche elementare Verstärkungseinheiten (G.1, G.2, ..., G.N) aufweisen.

## Claims

1. Method for amplifying an optical signal (S_{E}), ultrashort and having a wide spectral band, wherein:
- the optical signal (S_{E}) is spatially divided into N elementary optical signals (S_{E}.1, S_{E}.2, ..., S_{E}.N), the spectral ranges (Δλ_{E}.1, Δλ_{E}.2, ..., Δλ_{E}.N) of which are adjacent in pairs and form, substantially by juxtaposition, the spectral range (Δλ_{E}) of the optical signal (S_{E}), N being an integer at least equal to 2;
- the N elementary optical signals (S_{E}.1, S_{E}.2, ..., S_{E}.N) are amplified respectively by means of N elementary amplifiers (4,1, 4.2, ..., 4.N), the spectral ranges of amplification (Δλ_{G}.1, Δλ_{G}.2, ..., Δλ_{G}.N) of which respectively comprise substantially the spectral ranges (Δλ_{E}.1, Δλ_{E}.2, Δλ_{E}.N) of said N elementary optical signals;
- the N amplified elementary optical signals (S_{S}.1, S_{S}.2, ..., S_{S}.N) are assembled to form an amplified optical signal (S_{S}), the spectral range (Δλ_{S}) of which substantially coincides with a predetermined spectral range; and
**characterised in that**:
- the spectral phases of the N initial elementary optical signals (S_{E}.1, S_{E}.2, ..., S_{E}.N) are adjusted before amplification on the basis of the spectral phase of said amplified optical signal (S_{S}), by adjusting said spectral phases of the N initial elementary optical signals so that the duration (Δt_{S}) of the amplified optical signal (S_{S}) is equal to the duration (Δt_{E}) of the initial optical signal (S_{E}).

2. Method according to claim 1, **characterised in that** the N elementary optical signals (S_{E}.1, S_{E}.2, ..., S_{E}.N) are amplified by means of the N elementary amplifiers (4.1, 4.2, ..., 4.N) such that the power spectral density (DSP_{S}) of the amplified optical signal (S_{S}) has a profile substantially identical to a predetermined profile.

3. Method according to either claim 1 or claim 2, **characterised in that** the spectral phases of the N elementary optical signals (S_{E}.1, S_{E}.2, ..., S_{E}.N) are adjusted, on the basis of the spectral phase of said amplified optical signal (S_{S}), such that the duration (Δt_{S}) of the amplified optical signal (S_{S}) is substantially equal to a predetermined duration.

4. Device (1) for amplifying an optical signal (S_{E}), ultrashort and having a wide spectral band, comprising:
- means (2) for spatially dividing the optical signal (S_{E}) into N elementary optical signals (S_{E}.1, S_{E}.2, ..., S_{E}.N), the spectral ranges (Δλ_{E}.1, Δλ_{G}.2, ..., Δλ_{E}.N) of which are adjacent in pairs and form, substantially by juxtaposition, the spectral range (Δλ_{E}) of the optical signal (S_{E}), N being an integer at least equal to 2;
- elementary amplifiers (4.1, 4.2, ..., 4.N) arranged to amplify the N elementary optical signals, the spectral ranges (Δλ_{G}.1, Δλ_{G}.2, ..., Δλ_{G}.N) of said elementary amplifiers respectively comprising substantially the spectral ranges (Δλ_{E}.1, Δλ_{E}.2, ..., Δλ_{E}.N) of said N elementary optical signals;
- means (5) for assembling the N amplified elementary optical signals (S_{S}.1, S_{S}.2, ..., S_{S}.N) to form an amplified optical signal (S_{S}), the spectral range (Δλ_{S}) of which substantially coincides with a predetermined spectral range; and **Characterised in that**:
- means (3.1, 3.2, ..., 3.N, 6, 7) for adjusting the spectral phases of the N initial elementary optical signals (S_{E}.1, S_{E}.2, ..., S_{E}.N) before amplification on the basis of the spectral phase of said amplified optical signal (S_{S}), by adjusting said spectral phases of the N initial elementary optical signals so that the duration (Δt_{S}) of the amplified optical signal (S_{S}) is equal to the duration (Δt_{E}) of the initial optical signal (S_{E}).

5. Device according to claim 4, **characterised in that** the elementary amplifiers (4.1, 4.2, ..., 4.N) comprise an array af N cores (4.1, 4.2, ..., 4.N) of at least one amplifying optical fibre, having respectively N elementary amplification gains (G.1, G.2, ..., G.N), the means (2) for spatially dividing the optical signal (S_{E}) being arranged to distribute the N elementary optical signals (S_{E}.1, S_{E}.2, ..., S_{E}.N) spatially into said N cores.

6. Device according to either claim 4 or claim 5, **characterised in that** the adjustment means (3.1, 3.2, ..., 3.N, 6, 7) comprise:
- a first modulation portion (3.1, 3.2, ..., 3.N), positioned between the means (2) for spatially dividing the optical signal (S_{E}) and the means (5) for assembling the N amplified elementary optical signals (S_{S}.1, S_{S}.2, ..., S_{S}.N), capable of modulating at least in part the spectral phases of the N initial elementary optical signals (S_{E}.1, S_{E}.2, ..., S_{E}.N); and
- a second control portion (6), disposed downstream of said means (5) for assembling said amplified elementary optical signals (S_{S}.1, S_{S}.2, ..., S_{S}.N), connected to the first modulation portion (3.1, 3.2, ..., 3.N) and capable of receiving the amplified optical signal (S_{S}), of analysing the spectral phase of said amplified optical signal (S_{S}), of deducing therefrom the phase modulations to apply to said N elementary optical signals in order for the power spectral density (DSP_{S}) of the amplified optical signal (S_{S}) to have a profile substantially identical to a predetermined profile, and of providing corresponding orders to said first modulation portion.

7. Device according to claim 6, **characterised in that** the second control portion (6) of the adjustment means (3.1, 3.2, ..., 3.N, 6, 7) is arranged to receive the initial optical signal (S_{E}) and compare it, during the analysis of the spectral phase of the amplified optical signal (S_{S}), with said amplified optical signal (S_{S}).

8. Device according to any of claims 4 to 7, **characterised in that** the means (5) for assembling the N amplified elementary optical signals (S_{S}.1, S_{S}.2, ..., S_{S}.N) are arranged to cause said N amplified elementary optical signals to interfere temporally.

9. Device according to any of claims 4 to 8, **characterised in that** the number N of elementary optical signals (S_{E}.1, S_{E}.2, ..., S_{E}.N) and the spectral phases (Δλ_{E}.1, Δλ_{E}.2, ..., Δλ_{E}.N) of said elementary optical signals are determined such that the spectral phases (Δλ_{G}.1, Δλ_{G}.2, ..., Δλ_{G}.N) of the N elementary amplifiers (4.1, 4.2, ..., 4.N) respectively comprise substantially the spectral phases of said N elementary optical signals.

10. Device according to claim 9, **characterised in that** the number N of elementary optical signals (S_{E}.1, S_{E}.2, ..., S_{E}.N) and the spectral ranges (Δλ_{E}.1, Δλ_{G}.2, ..., Δλ_{E}.N) of said elementary optical signals are also determined such that the energies of said N elementary optical signals are substantially equal.

11. Device according to any of claims 4 to 10, **characterised in that** at least two of the N elementary amplifiers (4.1, 4.2, ..., 4.N) have different elementary amplification gains (G.1, G.2, ..., G.N).
